**Europäisches Patentamt**

**European Patent Office**

**Office européen des brevets**

(19)

(11) Veröffentlichungsnummer : **0 383 083 B1**

(12)

# EUROPÄISCHE PATENTSCHRIFT

(45) Veröffentlichungstag der Patentschrift :
**17.06.92 Patentblatt 92/25**

(51) Int. Cl.⁵ : **G01C 23/00**

(21) Anmeldenummer : **90101702.0**

(22) Anmeldetag : **29.01.90**

(54) **Flugzeug-Anzeigeinstrument.**

(30) Priorität : **11.02.89 DE 3904077**

(43) Veröffentlichungstag der Anmeldung :
**22.08.90 Patentblatt 90/34**

(45) Bekanntmachung des Hinweises auf die
Patenterteilung :
**17.06.92 Patentblatt 92/25**

(84) Benannte Vertragsstaaten :
**DE FR GB IT SE**

(56) Entgegenhaltungen :
**EP-A- 0 224 278**
**FR-A- 2 390 333**
**FR-A- 2 569 840**

(73) Patentinhaber : **Messerschmitt-Bölkow-Blohm**
**Gesellschaft mit beschränkter Haftung**
**Robert-Koch-Strasse**
**W-8012 Ottobrunn (DE)**

(72) Erfinder : **Herbst, Wolfgang-Bruno, Dr.-Ing.**
**Föhrenstrasse 7**
**W-8011 Putzbrunn (DE)**
Erfinder : **Liese, Hermann, Ing. (grad.)**
**Truderingerstrasse 2**
**W-8025 Unterhaching (DE)**

EP 0 383 083 B1

## Beschreibung

Die Erfindung bezieht sich auf ein Flugzeug-Anzeigeinstrument, bestehend aus einem festen Flugzeugsymbol und einem Referenzsystem für die Flugbahn-Kontrolle mit einem sogenannten "künstlichen Horizont" gemäß dem Gattungsbegriff des Anspruchs 1.

Die in Flugzeugen üblichen Anzeigen für die Flugführung - wie beispielsweise künstlicher Horizont, Kompass, Wendezeiger etc. - basieren auf der Messung der Flugzeuglage. So ist aus der DE-AS 17 98 151 ein Gerät zur Anzeige der Fluglage und der Kursabweichung eines Flugzeugs bekanntgeworden, das in einer lagestabilisierten Plattform eine sogenannte "Anzeigenkugel" aufweist, welche um eine Rollachse und eine hierzu senkrechte Nickachse sowie einer Seitenabweichungsachse drehbar angeordnet ist. Die Stellung eines Anzeigenbandes für die Höhenabweichung beim Landegleitflug bezüglich der Roll- und Nickbewegung ist auf der Anzeigekugel kompensiert. Eine irritationsfreie Kontrolle der Flugbahn, auch bei durch hohe Anstellwinkel gekennzeichnete extreme Fluglagen, ist hiermit nicht möglich.

Dies trifft auch für die in den DE-OS 27 15 262, DE-OS 28 19 804 und DE-OS 31 22 579 offenbarten Anzeigeinrichtungen zu. Letztere beschreibt ein Instrument, dessen Stützvorrichtung mit einer Anzeigeeinrichtung verbunden ist und auf der ein Symbol zur Darstellung der Flugzeugausrichtung drehbar getragen wird, sowie Ausrichtmittel zur Beibehaltung der vorgegebenen Zeiger-Winkelpositionen angeordnet sind. Die Anzeigeeinrichtung gemäß der erstgenannten Druckschrift bezieht sich auf eine Sichtfluganzeige mit verschiebbaren Markierungen auf einem Bildschirm, wobei die Markierungen entsprechend der angeflogenen Landebahn einstellbar sind.

Bekanntlich mißt der künstliche Horizont den Lagewinkel $\Theta$, den Roll-Lagewinkel $\varphi$ und die Richtung der Flugzeug-Hauptachse in Azimut $\Psi$. Nun werden Hochleistungsflugzeuge entwickelt, die nicht nur sehr hohe Geschwindigkeiten erreichen, sondern die es auch erlauben bis zu einem hohen Anstellwinkel $\alpha$ zu manövrieren. Dabei werden die Abweichungen der Flugzeuglage von der Flugrichtung (Vektor der Geschwindigkeit bzw. Richtung der Flugbahntangente) sehr groß und wie es sich gezeigt hat, hat ein Flugzeugführer zum Teil unüberwindliche Orientierungsschwierigkeiten und damit Probleme bei der Ausführung bestimmter Flugmanöver, denn beispielsweise bei Manövern im sogenannten Post-Stall-Bereich können Situationen auftreten, bei denen der Lagewinkel $\Theta$-Werte über 90° annimmt - beispielsweise bei einem Anstellwinkel $\alpha$ = 70° und einem Steigwinkel größer als $\gamma$ = 20° - und dann die Flugzeugrichtung nach hinten zu deuten scheint. Durch schnelle Fluglageänderungen können unter Umständen Wendegeschwindigkeiten vorgetäuscht werden, die tatsächlich gar nicht vorhanden sind.

Aufgabe der vorliegenden Erfindung ist es, ein Flugzeug-Anzeigeinstrument der eingangs genannten Art zu schaffen, das auch in extremen Fällen, also unter anderem bei sehr hohen Anstellwinkeln, dem Flugzeugführer flugbahnbezogene Informationen geben kann, ohne daß er auf die Lageinformationen verzichten muß.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung wird ein Ausführungsbeispiel erläutert und in den Figuren der Zeichnung skizziert. Es zeigen:

Fig. 1 eine Ansichtsskizze eines Flugzeug-Anzeigeinstrumentes mit einem künstlichen Horizont nach dem Stand der Technik in schematischer Darstellung,

Fig. 2 eine Ansichtsskizze eines Flugzeug-Anzeigeinstrumentes gemäß einem Ausführungsbeispiel nach der Erfindung,

Fig. 3 eine Ansichtsskizze eines weiteren Ausführungsbeispiels gemäß Fig. 2 mit einem Referenzsystem räumlicher Darstellung,

Fig. 4 ein Ausführungsbeispiel gemäß Fig. 2 zur Darstellung der Lageinformation bei einem Schiebewinkel $\beta$,

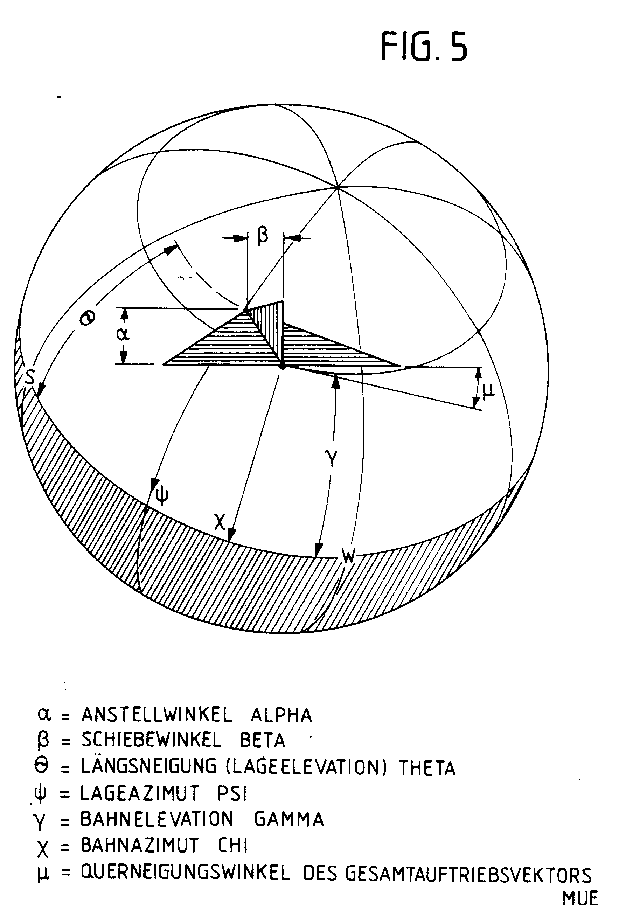

Fig. 5 ein Ausführungsbeispiel eines Flugzeug-Anzeigeinstrumentes mit flugbahnbezogenen und fluglagebezogenen Informationen in räumlicher Darstellung.

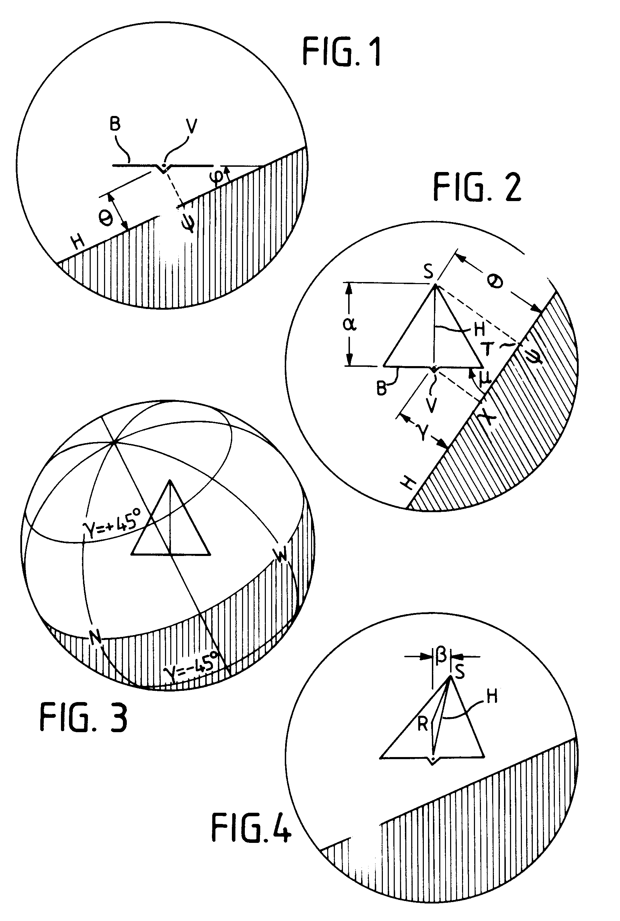

Wie bereits erwähnt, stellt die Fig. 1 den Stand der Technik in bezug auf das Flugzeug-Anzeigeinstrument in Form eines "künstlichen Horizonts" dar. Die Figur 2 dagegen zeigt ein Ausführungsbeispiel, das als Lösungsbeispiel zur gestellten Aufgabe anzusehen ist. Diese Anzeige entspricht der üblichen Anzeige in einem gedachten Flugzeug, welches die gleichen Manöver wie das echte Flugzeug ausführt, jedoch jeweils mit dem Anstell- und Schiebewinkel "Null". Wie beim üblichen künstlichen Horizont besteht sie aus einem die Roll-Lage repräsentierenden festen Flugzeugsymbol "B" (festen Balken "B"), dessen Mitte den Geschwindigkeitsvektor "V" darstellt. Die Höhe dieses Mittelpunktes "V" über dem beweglichen Referenzsystem H (künstlicher Horizont "H") entspricht der Bahnelevation $\gamma$ und der Aufpunkt senkrecht unter "V" am Referenzsystem "H" dem Bahnazimut $\chi$. Die Neigung des Referenzsystems "H" gegenüber dem Flugzeugsymbol "B" entspricht derjenigen des Winkels $\mu$, also dem Querneigungswinkel des Gesamtauftriebsvektors.

Die Lageinformation entsteht nun dadurch, daß über dem Flugzeugsymbol "B" ein Dreieck mit der Spitze

2

"S" errichtet wird, dessen Höhe dem Anstellwinkel $\alpha$ entspricht. Der Schiebewinkel $\beta$ wird durch eine Verschiebung der Spitze "S" parallel zum Flugzeugsymbol "B" dargestellt, wie es aus der Fig. 4 ersichtlich ist. Im Falle des Vorhandenseins eines Schiebewinkels erscheint über der Verbindungslinie "H von "V" zu "S" ein Dreieck mit der Spitze "R" und bildet eine Fläche, die gewissermaßen ein Seitenleitwerk darstellen soll.

Als Referenzsystem werden - zusätzlich zum Referenzsystem "H" - weitere Linien konstanter Bahnelevation $\gamma$ und Bahnazimut $\chi$ im Abstand von vorzugsweise 15°, 30° oder 45° angezeigt und zwar in einer räumlichen Darstellung so, daß die $\gamma$- und $\chi$-Linien Breitenkreise bzw. Meridiane eines "Globus" werden, wie dies in der Fig. 3 verdeutlicht ist. Diese Linien stellen sich als Elipsen dar. Bei maßstäblicher Höhe des Dreiecks mit der Spitze "S" kommt damit dieser Spitze eine Fluglagen-Information zu, wobei dem senkrecht unter "S" liegenden Aufpunkt "T" der Lageazimut $\Psi$ auf dem Referenzsystem "H" entspricht und der Höhe von "S" über dem Referenzsystem "H" die Lageelevation (Elevation der Längsachse des Flugzeugs) "$\Theta$".

Damit sind aber in dem Anzeigeinstrument alle Flugbahn- und Fluglageninformationen in einer sehr übersichtlichen und auch anschaulichen Darstellung enthalten. Die Bewegung des Punktes "V" entlang eines Großkreises entspricht einem Manöver in einer unveränderlichen Manöverebene, die Bewegung entlang einer gekrümmten Linie auf dem Globus einer Verdrehung der Manöverachse, beispielsweise die Bewegung auf einem Breitenkreis einer Steig- oder Sinkspirale.

Nun wird auch vorgeschlagen, daß der Bereich negativer Steigwinkel dunkel gegenüber dem Bereich positiver Steigwinkel eingefärbt ist.

Anstatt eines im Flugzeuginstrumentenbrett integrierten Anzeigeinstrumentes kann für die Anzeige des Referenzsystems H auch eine Projektion der Anzeige an der vorderen Cockpitscheibe (Head-up-Display) vorgenommen werden. Bei diesem Anzeigeinstrument ist dann das kugelförmige Referenzsystem H durch eine stilisierte Darstellung aus geraden Linien ersetzbar, deren Neigung dabei den Tangenten an den $\chi$ und $\gamma$-Linien im kugeligen Referenzsystem H entspricht.

Gleichermaßen kann die Anzeige für den Piloten von einem Helmvisier (Helmet mounted Display) als Anzeigeinstrument widergegeben werden und das Referenzsystem H derart in das Sichtfeld projiziert werden, als wenn sich der Pilot im Mittelpunkt des kugelförmigen Referenzsystems H befinden würde.

Die Anzeige kann neben den vorgenannten Darstellungen auch weitere flugspezifische Daten enthalten, die sich z.B. auf die Navigation, die Flugleistung, Zielerfassung etc. beziehen.

Damit ist nun eine irritationsfreie Kontrolle der Flugbahn auch bei sehr hohen Anstellwinkeln von extremen Fluglagen geschaffen.

## Patentansprüche

1. Flugzeug-Anzeigeinstrument, bestehend aus einem festen Flugzeugsymbol (B) und einem Referenzsystem (H) für die Flugbahn-Kontrolle mit einem sogenannten "künstlichen Horizont", der die Lageelevation ($\Theta$), den Roll-Lagenwinkel ($\varphi$) und die Richtung der Flugzeug-Längsachse in Azimut ($\Psi$) mißt, **dadurch gekennzeichnet,** daß die Lage des fester Flugzeugsymbols (B) im Referenzsystem (H) der Lage eines gedachten Flugzeuges entspricht, welches die gleichen Manöver wie das echte Flugzeug mit einem Null-Anstellwinkel und einem Null-Schiebewinkel durchführt, wobei die Lage des Mittelpunktes (V) des Flugzeugsymboles (B) gegenüber dem Referenzsystem (H) die Flugbahninformationen Bahnelevation ($\gamma$) und Bahnazimut ($\chi$) sowie die Querneigung des Referenzsystems (H) gegenüber dem Flugzeugsymbol (B) den Querneigungswinkel ($\mu$) des Gesamtauftriebvektors ergibt, während ein über dem Flugzeugsymbol (B) mittig angeordneter Punkt eine Spitze (S) eines variablen Dreiecks mit dem Flugzeugsymbol (B) bildet und durch die Entfernung von dessen Mittelpunkt (V) zur Spitze (S) den Anstellwinkel ($\alpha$) des Flugzeuges darstellt, bei gleicher Skalierung wie das Referenzsystem (H) die senkrechte Höhe der Spitze (S) zum Referenzsystem (H) die Lageelevation ($\Theta$) darstellt und der senkrecht unter der Spitze (S) liegende Aufpunkt (T) den Lageazimut ($\Psi$) darstellt, wobei das Referenzsystem (H) vom Flugzeug-Anzeigeinstrument in Form einer zweidimensionalen Darstellung einer Kugel mit Längen- und Breitenkreisen oder als zweidimensionale stilisierte Darstellung aus geraden oder gekrümmten Linien an der vorderen Cockpitscheibe oder am Helmvisier zur Anzeige gebracht werden kann.

2. Flugzeug-Anzeigeinstrument nach Anspruch 1, **dadurch gekennzeichnet,** daß ein Schiebewinkel $\beta$ durch eine maßstäbliche Parallelverschiebung der Spitze S zum Balken B zusätzlich dargestellt wird, wobei ein über der Verbindungslinie V - S errichtetes - ein Seitenleitwerk repräsentierendes - Dreieck mit der Spitze R angezeigt wird.

3. Flugzeug-Anzeigeinstrument nach den Ansprüchen 1 bis 2, **dadurch gekennzeichnet,** daß die Kugeloberflächen im Bereich negativer Bahnneigungswinkel dunkler als die Kugeloberfläche im Bereich positiver Bahnneigungswinkel dargestellt werden.

4. Flugzeug-Anzeigeinstrument nach den Ansprüchen 1 bis 3, **dadurch gekennzeichnet,** daß die Kurs-

winkel ($\chi$) im Abstand von 15°, 30° und/oder 45° in räumlicher Darstellung angezeigt werden.

5. Flugzeug-Anzeigeinstrument nach den Ansprüchen 1 bis 4, **dadurch gekennzeichnet,** daß bei der Anzeige an der vorderen Cockpitscheibe das kugelförmige Referenzsystem (H) durch eine stilisierte Darstellung aus geraden Linien ersetzt ist und die Neigung dieser Linien dabei den Tangenten an den ($\chi$)- und $\gamma$-Linien im kugeligen Referenzsystem (H) entspricht.

6. Flugzeug-Anzeigeinstrument nach den Ansprüchen 1 bis 5, **dadurch gekennzeichnet,** daß bei der Anzeige auf dem Helmvisier das Referenzsystem (H) in das Sichtfeld projiziert ist, derart, daß sich der Pilot virtuell im Mittelpunkt des kugeligen Referenzsystems (H) befindet.

7. Flugzeug-Anzeigeinstrument nach den Ansprüchen 1 bis 6, **dadurch gekennzeichnet,** daß vom Anzeigeinstrument zusätzliche analoge oder digitale Anzeigen von flugspezifischen Daten darstellbar sind.

## Claims

1. Aircraft indicating instrument, comprising a fixed aircraft symbol (B) and a reference system (H) for flight-path control with a so-called "artificial horizon" which measures the attitude elevation ($\Theta$), the roll-attitude angle ($\varphi$) and the direction of the aircraft longitudinal axis in azimuth ($\Psi$), characterised in that the attitude of the fixed aircraft symbol (B) in the reference system (H) corresponds with the attitude of an imaginary aircraft which executes the same manoeurvres as the real aircraft with a zero angle of attack and a zero yaw, in which respect the position of the centre point (V) of the aircraft symbol (B) relative to the reference system (H) indicates the flight-path information path elevation ($\gamma$) and path azimuth (x), and the banking of the reference system (H) relative to the aircraft symbol (B) indicates the banking angle ($\mu$) of the overall lift vector, whilst a point arranged centrally above the aircraft symbol (B) forms a tip (S) of a variable triangle with the aircraft symbol (B), indicating at the same scale the attack angle ($\alpha$) of the aircraft by way of the distance of its central point (V) to the tip (S), the vertical height of the tip (S) relative to the reference system (H) representing the attitude elevation ($\Theta$), and a point (T) located vertically below the tip (S) representing the attitude azimuth ($\Psi$), in which respect the reference system (H) is indicated by the aircraft indicating instrument being in the form of a two-dimensional image of a ball with circles of latitude and longitude or in a two-dimensional styled representation of straight or curved lines on the front cockpit window or helmet visor.

2. Aircraft indicating instrument according to claim 1, characterised in that a yaw angle $\beta$ is additionally shown by parallel displacement to scale of the tip S relative to the beam B, in which respect a triangle with a tip R is indicated, which is placed above the connecting line V and represents a vertical fin arrangement.

3. Aircraft indicating instrument according to claims 1 to 2, characterised in that the ball surfaces in the region of negative path attitude angles are shown darker than the ball surface in the region of positive path attitude angles.

4. Aircraft indicating instrument according to claims 1 to 3, characterised in that the course angle (x) is indicated representatively at a distance of 15°, 30° and/or 45°.

5. Aircraft indicating instrument according to claims 1 to 4, characterised in that the ball-shaped reference system (H) is replaced by a stylised representation of straight lines on the frontal cockpit window, and the attitude of these lines then corresponds with the tangents at the (x)- and $\gamma$-lines in the ball-shaped reference system (H).

6. Aircraft indicating instrument according to claims 1 to 5, characterised in that, with indication on the helmet visor, the reference system (H) is projected into the viewing field in such a manner that the pilot is virtually in the centre of the ball-shaped reference system (H).

7. Aircraft indication instrument according to claims 1 to 6, characterised in that additional analog or digital indications of flight-specific data can be represented by the indicating instrument.

## Revendications

1. Dispositif d'affichage pour aéronef, composé d'un symbole d'aéronef fixe (B) et d'un système de référence (H) pour le contrôle de la trajectoire de vol avec un "horizon artificiel" qui mesure l'élévation de la position ( ), l'angle de roulis ( ) et la direction de l'axe longitudinal de l'aéronef en l'azimut ( ), caractérisé en ce que la position du symbole d'aéronef fixe (B) dans le système de référence (H) correspond à la position d'un aéronef imaginaire qui exécute les mêmes manoeuvres que l'aéronef réel avec un angle d'incidence zéro et un angle de dérapage zéro, la position du centre (V) du symbole d'aéronef (B) par rapport au système de référence (H) fournissant des informations concernant la trajectoire de vol, à savoir élévation de la trajectoire ( ) et azimut de la trajectoire (x) et l'inclinaison latérale du système de référence (H) par rapport au symbole d'aéronef (B) donnant l'angle de pente (u) du vecteur de sustentation totale tandis qu'un point centré au-dessus du symbole d'aéronef (B) forme un sommet (S) d'un triangle variable avec le symbole d'aéronef (B) et la distance entre le centre (V) dudit symbole et le sommet (S) indiquant l'angle d'incidence ( ) de l'aéronef, la hauteur perpendiculaire du sommet (S) par rapport au système de référence (H) représente, en cas de même graduation que le système de référence (H), l'élévation de la position ( ) et le point (T) situé verticalement sous le sommet (S) représente l'azimut de la position ( ), le système de référence (H) du dispositif d'affichage de l'aéronef pouvant se présenter sous la forme d'une représentation à deux dimensions d'une sphère avec des cercles de longitude et de latitude ou sous forme de représentation à deux dimensions stylisée constituée de droites ou de courbes sur la vitre avant de la cabine de pilotage ou sur le viseur.

2. Dispositif d'affichage pour aéronef selon la revendication 1, caractérisé en ce qu'un angle de dérapage (β) est en plus représenté par un déplacement parallèle à l'échelle du sommet S par rapport à la barre (3), un triangle formé par la ligne de jonction (V - )S avec pour sommet R et représentant une dérive étant affiché.

3. Dispositif d'affichage pour aéronef selon les revendications 1 à 2, caractérisé en ce que les surfaces de la sphère situées dans la zone d'angles négatifs d'inclinaison de la trajectoire sont représentés plus foncées que la surface de la sphère dans la zone d'angles positifs d'inclinaison de la trajectoire.

4. Dispositif d'affichage pour aéronef selon les revendications 1 à 3, caractérisé en ce que les angles de route (x) sont représentés dans l'espace à une distance de 15°, 30° et/ou 45°.

5. Dispositif d'affichage pour aéronef selon les revendications 1 à 4, caractérisé en ce que dans le cas de l'affichage sur la vitre avant de la cabine de pilotage, le système de référence sphérique (H) est remplacé par une représentation stylisée composée de lignes droites et l'inclinaison de ces lignes correspond aux tangentes aux lignes (x) et ( ) dans le système de référence sphérique (H).

6. Dispositif d'affichage pour aéronef selon les revendications 1 à 5, caractérisé en ce que dans le cas de l'affichage sur le viseur, le système de référence (H) est projeté dans le champ visuel de telle manière que le pilote se trouve virtuellement au centre du système de référence sphérique (H).

7. Dispositif d'affichage pour aéronef selon les revendications 1 à 6, caractérisé en ce que le dispositif d'affichage peut effectuer des représentations analogiques ou numériques supplémentaires de données spécifiques au vol.

FIG.1

FIG. 2

FIG. 3

FIG.4

# FIG. 5

α = ANSTELLWINKEL ALPHA

β = SCHIEBEWINKEL BETA

Θ = LÄNGSNEIGUNG (LAGEELEVATION) THETA

ψ = LAGEAZIMUT PSI

γ = BAHNELEVATION GAMMA

χ = BAHNAZIMUT CHI

μ = QUERNEIGUNGSWINKEL DES GESAMTAUFTRIEBSVEKTORS MUE